# FASCICULE DE BREVET EUROPEEN

(11) **EP 3 842 219 B1**
(45) Date de publication et mention de la délivrance du brevet: **25.10.2023**
(21) Numéro de dépôt: 20216364.8
(22) Date de dépôt: 22.12.2020
(51) Int. Cl.: B29C 70/44, B29C 70/54, B29C 70/86, B29C 70/08, B29C 51/10, B29C 51/14, B29C 51/28

(54) **PROCÉDÉ DE FABRICATION D'UNE PIÈCE BI-MATIÈRE ET PIÈCE BI-MATIÈRE FABRIQUÉE SELON UN TEL PROCÉDÉ**
VERFAHREN ZUR HERSTELLUNG EINES TEILS AUS ZWEI WERKSTOFFEN UND NACH DIESEM VERFAHREN HERGESTELLTES TEIL AUS ZWEI WERKSTOFFEN
METHOD FOR MANUFACTURING A BI-MATERIAL PART AND BI-MATERIAL PART MANUFACTURED ACCORDING TO SUCH A METHOD

(30) Priorité: 23.12.2019 FR 1915451
(43) Date de publication de la demande: 30.06.2021
(73) Titulaire: Mecelec Composites, 07300 Mauves (FR)
(72) Inventeur: BLANC-BRUDE, Cédric, 73240 SAINT GENIX LES VILLAGES (FR)
(74) Mandataire: Lavoix

(56) Documents cités:
- EP-A1- 2 463 093
- EP-B1- 2 463 093
- US-A1- 2012 237 356
- US-B2- 7 931 852

## Description

La présente invention concerne un procédé de fabrication d'une pièce bi-matière. La présente invention concerne également une pièce bi-matière fabriquée selon un tel procédé.

EP 2 463 093 A1 décrit un article comportant une feuille de protection et un procédé de fabrication d'un tel article permettant d'obtenir une bonne liaison entre la feuille de protection et l'article.

Il est connu de fabriquer des pièces bi-matière comprenant un substrat et un renfort en matériau composite. Pour ce faire, le substrat est tout d'abord formé, notamment en thermoformant, par exemple, de l'ABS (acronyme de « Acrylonitrile Butadiène Styrène »). Puis, la couche en matériau composite est moulée avant d'être collée ou soudée au substrat. Ce procédé nécessite donc un moule pour le substrat et un moule pour la couche en matériau composite, chaque moule devant être conçu avec précision pour que les formes du substrat et de la couche en matériau composite correspondent. Ceci rend le procédé de fabrication de la pièce bi-matière coûteux et fastidieux.

Il est connu de US 7 931 852 B2 de fabriquer une pièce bi-matière en déposant sur une pièce à renforcer une armature de matériau composite, puis de recouvrir cet ensemble d'une feuille étanche permettant d'entourer cet ensemble de vide. Une fois cet ensemble sous vide, de la résine est injectée dans l'armature afin de former le matériau composite, cette résine diffusant dans l'armature, cette diffusion étant aidée par le vide. Ce procédé de fabrication nécessite l'utilisation de plus grandes quantités de résine et implique un temps de mise en oeuvre long, la diffusion de la résine dans l'armature étant lente et dépendant des dimensions de la pièce à renforcer.

C'est à ces inconvénients qu'entend plus particulièrement remédier l'invention en proposant un procédé de fabrication d'une pièce bi-matière plus simple, plus économique et permettant une capacité de production plus élevée.

À cet effet, l'invention concerne un procédé de fabrication d'une pièce bi-matière tel que défini à la revendication 1.

Grâce à l'invention, le tissu pré-imprégné étant appliqué directement sur le substrat, il n'est pas nécessaire d'avoir un moule spécifique pour fabriquer le renfort en matériau composite. Cela facilite la fabrication des pièces bi-matière en réduisant le nombre d'étapes à effectuer. Cela permet également de réduire le coût de fabrication puisqu'il n'est pas nécessaire de disposer de deux moules différents conçus avec précision pour fabriquer le substrat et le renfort en matériau composite de manière différenciée. Cela permet également de réduire le temps de fabrication des pièces bi-matière en réduisant le nombre d'étapes à effectuer et en diminuant la durée de l'étape de renforcement du substrat.

Des aspects avantageux mais non obligatoires du procédé de fabrication conforme à l'invention sont spécifiés aux revendications 2 à 9.

L'invention concerne également une pièce bi-matière telle que définie à la revendication 10.

Des aspects avantageux mais non-obligatoire de la pièce bi-matière conforme à l'invention sont spécifiés aux revendications 11 et 12.

L'invention sera mieux comprise et d'autres avantages de celle-ci apparaîtront plus clairement à la lumière de la description qui va suivre de deux modes de réalisation d'un procédé de fabrication d'une pièce bi-matière et d'une pièce bi-matière fabriquée selon un tel procédé, conformes à son principe, donnée uniquement à titre d'exemple et faite en référence aux dessins, dans lesquels :
[Fig 1] la figure 1 est une représentation schématique en coupe d'une première étape d'un procédé conforme à un premier mode de réalisation de l'invention.
[Fig 2] la figure 2 est une représentation d'une deuxième étape du procédé, postérieure à celle de la figure 1 ;
[Fig 3] la figure 3 est une représentation d'une troisième étape du procédé, postérieure à celle de la figure 2 ;
[Fig 4] la figure 4 est une représentation d'une quatrième étape du procédé, postérieure à celle de la figure 3 ;
[Fig 5] la figure 5 est une représentation d'une cinquième étape du procédé, postérieure à celle de la figure 4 ;
[Fig 6] la figure 6 est une représentation d'une sixième étape du procédé, postérieure à celle de la figure 5 ;
[Fig 7] la figure 7 est une représentation d'une septième étape du procédé, postérieure à celle de la figure 6 ;
[Fig 8] la figure 8 est une représentation schématique en coupe d'un procédé de test d'une pièce bi-matière fabriquée avec le procédé des figures 1 à 7 ; et
[Fig 9] la figure 9 est une représentation d'une étape d'un procédé conforme à second mode de réalisation de l'invention, cette étape étant analogue à celle de la figure 5.

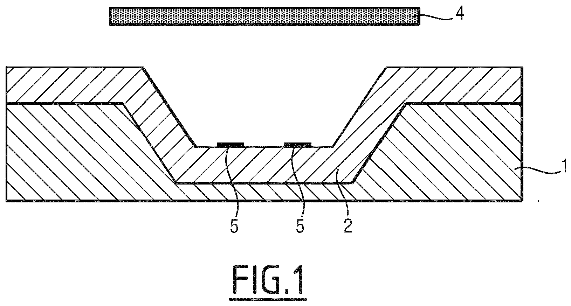

Certaines étapes d'un procédé de fabrication conforme à l'invention d'une pièce bi-matière 12, comprenant un substrat 2 et un renfort en matériau composite 4, sont représentées sur les figures 1 à 7. Le substrat 2 est rigide, en ce sens qu'il conserve sa forme lorsqu'il n'est pas soumis à une contrainte mécanique extérieure.

Ce procédé comprend une étape préalable non représentée, dans laquelle le substrat 2 est thermoformé à partir d'une feuille d'ABS/PMMA (acronyme de « Acrylonitrile Butadiène Styrène » / "Polyméthacrylate de méthyle").

Le substrat 2 est thermoformé à partir d'une feuille d'ABS/PMMA, cette feuille d'ABS/PMMA est une feuille comprenant une première face qui est un feuillet d'ABS et une deuxième face qui est un feuillet de PMMA, ces deux feuillets sont co-extrudés ensemble pour former la feuille d'ABS/PMMA.

Lors de cette étape de thermoformage du substrat 2, un matériau en forme de plaque est chauffé. Ensuite, de l'air est injecté pour gonfler la plaque de matériau. Ensuite, une dépression est créée entre le moule et le matériau plastique encore chaud, pour plaquer ce dernier contre la surface plus froide du moule. On laisse ensuite refroidir la plaque de matériau qui forme ainsi le substrat thermoformé 2.

Le substrat thermoformé 2 comprend donc une première face en ABS et une deuxième face en PMMA.

Une première étape d'un procédé de fabrication de la pièce bi-matière 12 est représentée schématiquement sur la figure 1.

Le renfort en matériau composite 4 est composé d'au moins une couche de tissu pré-imprégné à fibres continues et tissées entre elles. Par fibres continues on entend que la longueur des fibres est principalement limitée par les dimensions du rouleau (ou autre conditionnement) qui supporte ce tissu, avant l'imprégnation. Le tissu peut-être, par exemple, composé de fibres de verre, de fibres de carbone ou de fibres naturelles, telles que des fibres de lin. Ce tissu est imprégné, avant la mise en oeuvre du procédé de fabrication de la pièce bi-matière 12, avec une résine polyester ou une résine vinylester.

Une fois le substrat 2 formé, il est placé sur une contre-forme 1, comme montré sur la figure 1. Cette contre-forme 1, souvent réalisée en matériau composite ou en bois, peut être réalisée avec des épaisseurs réduites, car elle ne nécessite pas de propriétés structurelles importantes. En effet, elle n'est utilisée, lors du procédé de fabrication de la pièce bi-matière 12, que pour maintenir le substrat 2 en place et non pour le former.

Le substrat 2, thermoformé à partir d'une feuille d'ABS/PMMA, est placé sur la contre-forme 1 de sorte que sa deuxième face en PMMA est dirigée vers la contre-forme 1. Ainsi, cette deuxième face est située sur l'extérieur du substrat 2. Grâce aux propriétés du PMMA de la deuxième face, le substrat thermoformé 2 est alors mieux protégé des rayonnements ultraviolets qu'un substrat sans face extérieure en PMMA.

Au besoin, des ventouses, fixées sur la contre-forme 1, peuvent être ajoutées localement, pour éviter des déplacements ou déformations du substrat 2, lors de de la mise sous vide ultérieure.

Dans la première étape de la figure 1, un liant en polyuréthane 5 peut être appliqué, localement sur la surface exposée du substrat 2, c'est-à-dire sa surface opposée à la contre-forme 1, préférentiellement sur les zones de la pièce 12 destinées à subir le plus de contraintes. Par exemple, le liant 5 est appliqué sous la forme de cordons. Ce liant 5 est destiné à améliorer l'adhérence entre le renfort 4 et le substrat 2. Ce liant en polyuréthane 5 est prévu pour réticuler dans les mêmes conditions de transformations et simultanément à la résine qui imprègne le tissu du renfort 4.

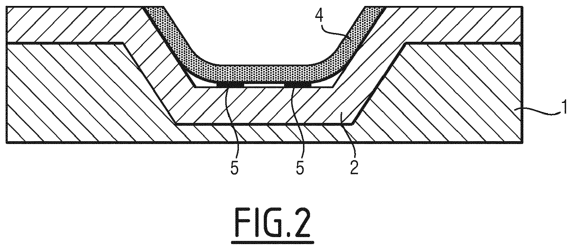

Dans une deuxième étape, représentée sur la figure 2, le renfort 4 est disposé sur le substrat 2. A cette étape, le substrat 2 et le renfort 4 n'étant pas encore liés, le renfort 4 n'épouse pas parfaitement la forme du substrat 2, notamment dans les coins.

Le substrat 2, thermoformé à partir d'une feuille d'ABS/PMMA, est disposé sur la première face en ABS du substrat 2.

Sur la figure 2, le renfort 4 est représenté comme disposé uniquement dans une partie concave du substrat 2. Toutefois, il pourrait s'étendre en dehors de cette zone concave, voire sur tout un côté du substrat 2.

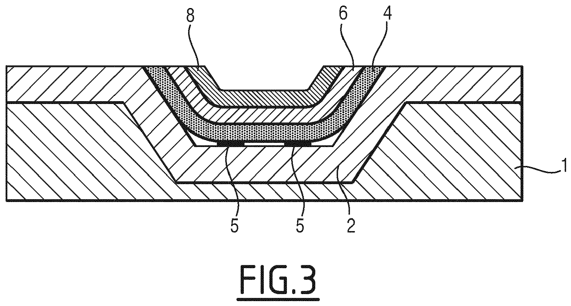

Dans une troisième étape représentée sur la figure 3, des couches de rétention sont appliquées sur le renfort 4. Les couches de rétention ont pour fonction de retenir un excédent de résine qui dégorge du renfort 4 au cours du procédé de fabrication, c'est-à-dire de séparer la résine dégorgée du renfort de la résine présente dans le renfort puis de récupérer cette résine dégorgée, comme expliqué ci-après. Elles comprennent un tissu en polyamide 6, dit tissu d'arrache ou film micro perforé, et un buvard 8 qui peut, par exemple, être fabriqué en polyester non tissé. Ce buvard 8 est optionnel, c'est-à-dire que les couches de rétention peuvent ne contenir que le tissu en polyamide 6. Le buvard 8 peut ne pas recouvrir toute la surface du tissus d'arrache 6 ou du film micro perforé.

Le tissu en polyamide 6 et éventuellement le buvard 8 forment chacun une couche dans le sens où le tissu en polyamide et éventuellement le buvard recouvrent au moins 75% de la surface du renfort 4. De préférence, les couches de rétention recouvrent au moins 80% de la surface du renfort 4. Ainsi, les couches de rétention recouvrent l'essentiel de la surface du renfort 4. En outre, cette couverture du renfort 4 est continue et uniforme. En pratique, le tissu en polyamide 6 du renfort 4 est formé de bandes. Lorsque la largeur de ces bandes de tissu est inférieure à au moins une dimension du renfort 4, des zones de chevauchement du tissu en polyamide sont prévues pour obtenir une couverture continue et uniforme. Cette couverture importante du renfort 4 est avantageuse car elle permet d'améliorer la récupération de l'excédent de résine qui dégorge du renfort 4. Cette couverture importante du renfort 4 permet également d'obtenir un renfort 4 disposant d'un taux de fibres plus élevé, comme décrit ci-après, et présentant ainsi de meilleures propriétés mécaniques.

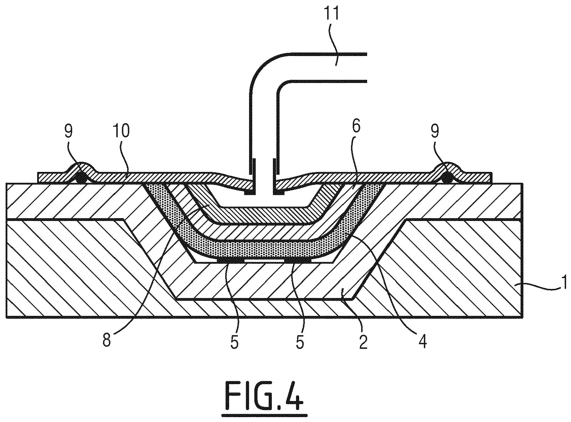

Puis, dans une quatrième étape, représentée sur la figure 4, une bâche 10, par exemple en nylon ou en silicone, recouvre le tout. La bâche souple 10 est étanche à l'air. L'extrémité de la bâche 10 est positionnée directement sur le substrat 2. Un joint 9 assure l'étanchéité entre la bâche 10 et le substrat 2. Le joint 9 est situé entre la bâche 10 et le substrat 2, à au moins 1cm du bord de la bâche 10. La bâche 10 est équipée d'une canule 11, autrement appelée prise d'air, qui la traverse de part en part.

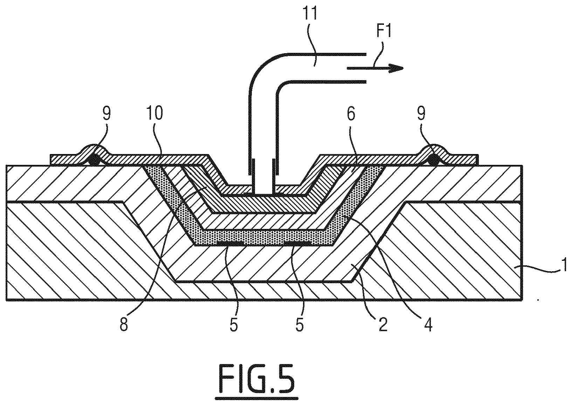

Ensuite, dans une cinquième étape, représentée sur la figure 5, le vide est tiré sous la bâche 10, c'est-à-dire dans le volume situé entre cette bâche 10 et le substrat 2. Le vide est tiré à travers la canule 11, comme montré par la flèche F1 qui représente l'écoulement d'air aspiré dans ce volume. Le tirage d'air est obtenu en branchant la canule 11 à une source de dépression, telle qu'une pompe à vide. Au terme de cette cinquième étape, la pression d'air absolue dans le volume compris entre la bâche 10 et le substrat 2 est inférieure ou égale à 0,2 bars. En pratique, la pression au terme de la cinquième étape peut être comprise entre 0,1 et 0,5 bars, de préférence entre 0,1 bars et 0,2 bars, en fonction des matériaux choisis et des caractéristiques mécaniques souhaitées pour la pièce bi-matière 12.

La mise en dépression de l'ensemble des couches 4, 6 et 8 superposées sur le substrat 2 provoque le rapprochement du renfort 4 du substrat 2. Le renfort 4 se plaque alors au substrat 2 pour épouser parfaitement sa forme. Une réaction chimique démarre alors, et permet la réticulation du matériau composite du renfort 4, simultanément à celle du liant polyuréthane 5. Cette réaction chimique peut être accélérée en plaçant l'ensemble du dispositif dans un environnement chaud, par exemple dans une étuve chauffée, de préférence, dans une gamme de température comprise entre 50 et 70°C. Lors de cette mise en dépression, un excédent de résine dégorge du renfort 4, dont l'épaisseur tend à diminuer du fait de la compression exercée par les couches 6, 8 et 10 en direction du substrat 2. Pour avoir un taux de fibres optimal dans le renfort 4, par exemple un taux de fibres de 45% à 75 %, cet excédent de résine est séparé du renfort 4 via une migration à travers la couche de rétention 6, et via une absorption dans la couche de rétention 8. Ainsi, la bâche 10 est moins salie ou endommagée par l'excédent de résine et peut être réutilisée pour la fabrication de plusieurs pièces. Au terme de cette cinquième étape, le renfort 4 est durci du fait de la réaction chimique qui a eu lieu. Une adhésion du substrat 2 au renfort composite 4 est constatée, ponctuellement via le liant 5.

En outre, le fait de disposer le renfort 4 sur la première face en ABS du substrat 2 est avantageux car l'ABS permet de favoriser l'adhésion du substrat 2 au renfort composite 4.

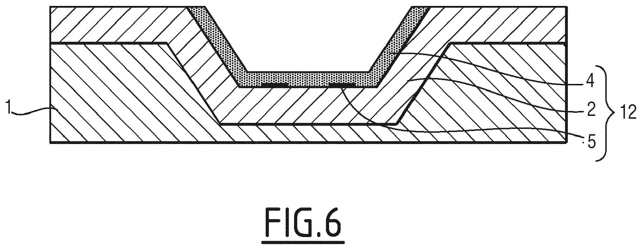

Dans une sixième étape, la bâche 10 et les couches de rétention 6 et 8 sont retirées et la pièce bi-matière 12 est formée, comme sur la figure 6.

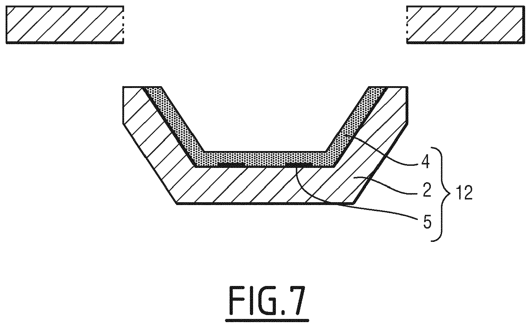

Dans une septième étape optionnelle, représentée sur la figure 7, la pièce 12 peut être usinée. Grâce à ce procédé, il n'est pas nécessaire d'usiner le substrat 2 et le renfort 4 de manière différenciée, c'est la pièce 12 entière qui est traitée, éliminant ainsi le besoin d'étapes d'usinage successives.

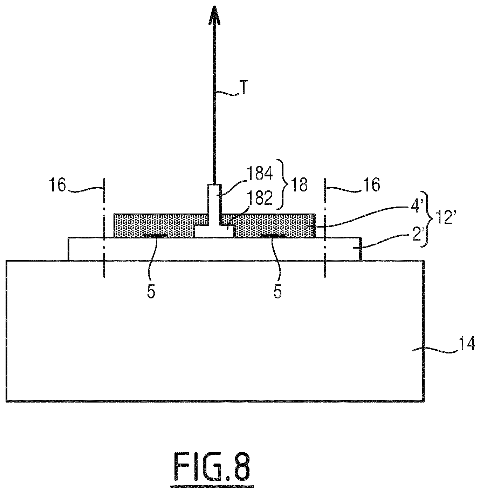

La figure 8 présente un dispositif de mesure de la cohésion au sein d'une portion composite 12' de la pièce 12. La portion 12' comprend une portion 2' du substrat 2 et une portion 4' du renfort 4, les dimensions de la portion 4' du renfort 4 étant inférieures aux dimensions de la portion 2' du substrat 2. La portion composite 12' ne forme pas la totalité de la pièce 12. Par exemple, la portion 4' du renfort 4 est un carré ayant un côté compris entre 95mm et 105mm. De préférence, le côté de la portion 4' mesure 1 00mm. La portion 2' du substrat 2 forme, par exemple, un carré ayant un côté compris entre 145mm et 155mm. De préférence, le côté de la portion 2' mesure 150mm.

La portion 12' est placée sur un support plan 14 auquel elle est fixée à l'aide de quatre vis 16, représentées sur la figure 8 par leurs traits d'axe et qui traversent la portion 2' du substrat 2 sans traverser la portion 4' du renfort 4.

Pour pouvoir exercer une force de traction T sur le renfort 4 sans en exercer directement sur le substrat 2, un insert 18 est placé au centre du renfort 4 de forme carrée, entre la première et la deuxième étape du procédé de fabrication de la pièce 12 décrit ci-dessus, entre le substrat 2 et le renfort 4. Cet insert 18 en acier, par exemple en acier inoxydable, comprend une embase circulaire 182 de diamètre extérieur 23 mm, qui est au contact du substrat 2, et un fut 184 qui traverse le renfort 4 pour ressortir de la pièce 12.

La force de traction T est ensuite appliquée sur le renfort 4, dans une direction opposée au substrat 2, dans un sens de décollement du renfort 4 par rapport au substrat 2. La force de traction T appliquée augmente de manière régulière. La pièce 12 est réputée fragilisée lorsque cette force T ne peut plus croître. Si la force T diminue brutalement, cela signifie que le renfort 4 est décollé du substrat 2 ou que le substrat 2 a cassé, par exemple au niveau des vis 16.

Grâce à ce dispositif, la résistance à l'arrachement du renfort 4 a pu être mesurée. Cette résistance est comprise entre 175 daN/dm², soit environ 17,5 T/m², et 550 daN/dm², soit environ 55 T/m².

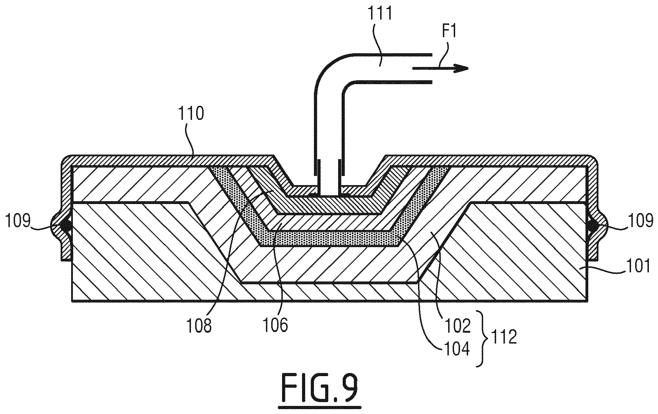

Sur la figure 9 est représentée une étape d'un procédé de fabrication d'une pièce bi-matière 112, conforme à un second mode de réalisation. La pièce bi-matière 112 est fonctionnellement similaire à la pièce bi-matière 12, mais s'en distingue par sa structure. Les éléments nécessaires à la mise en oeuvre de cette étape du procédé analogues à ceux du premier mode de réalisation portent les mêmes références augmentées de 100 et fonctionnent de la même façon. Dans ce qui suit, on décrit principalement les différences entre les premier et second modes de réalisation du procédé.

Dans ce mode de réalisation, la pièce bi-matière comprend un substrat 102 et un renfort 104, présentés, sur la figure 9, dans une étape similaire à la cinquième étape du premier mode de réalisation du procédé. Le substrat 102 est supporté par une contre-forme 101. Le renfort 104 est composé d'au moins une couche de tissu composé de fibres continues pré-imprégnées avec une résine acrylique. La chimie de réticulation de cette résine permettant une bonne adhésion du renfort 104 avec le substrat 102, il n'est pas nécessaire d'ajouter un liant, du type du liant 5 du premier mode de réalisation. Lors du procédé, dans des première à troisième étapes similaires aux deuxième à quatrième étapes du premier mode de réalisation du procédé, le renfort 104, des couches de rétention 106 et 108 et une bâche 110, sont superposés sur le substrat 102. La bâche 110 s'étend jusqu'à la contre-forme 101. Un joint 109 est situé entre la bâche 110 et la contre-forme 101, de préférence à une distance d'au moins 1cm du bord de la bâche 110, pour assurer l'étanchéité entre l'extérieur et la zone où sont reçus le renfort et les couches de rétention. La bâche 110 est équipée d'une canule de tirage d'air 111.

Ensuite, dans une cinquième étape, représentée sur la figure 9, le vide est tiré sous la bâche 10, à travers la canule 111, comme représenté par la flèche F1. Pour activer la réaction entre la résine du renfort 104 et le substrat 102, après que le vide a été tiré, l'ensemble est placé dans une étuve chauffée à une température comprise entre 50 °C et 80 °C. De préférence, cette température est de 60°C. Dans cette étape, la résine acrylique en excès, qui dégorge du renfort 104, est plus facilement séparée puis absorbée par les couches de rétention 106 et 108.

Les éléments 101, 102, 106, 108, 109, 110 et 111 du second mode de réalisation sont identiques aux éléments 1, 2, 6, 8, 9, 10 et 11 du premier mode de réalisation.

Les joints 9 et 109 représentent un système d'étanchéité. En variante, le système d'étanchéité peut être différent. Il peut par exemple comprendre un système de plaquage de la bâche 10 ou 110 sur le joint 9 ou 109 et du joint 9 ou 109 sur le substrat 2 ou sur la contre-forme 101.

Le dispositif de mesure présenté sur la figure 8 peut être utilisé pour mesurer la cohésion au sein d'une portion composite de la pièce 112 du second mode de réalisation. Le procédé utilisé pour mesurer la cohésion au sein de la pièce 112 est identique à celui utilisé pour mesurer la cohésion au sein de la pièce 12 du premier mode de réalisation.

En variante, un renfort supplémentaire peut être disposé, localement, à des endroits fragiles de la pièce 12 ou 112, les couches de retentions 6 ou 106 et le renfort 4 ou 104. Ce renfort supplémentaire peut être composé de fibres non imprégnées qui absorbent, lorsque le vide est tiré sous la bâche10 ou 110, les excédents de résine du renfort 4 ou 104.

Selon une autre variante, le renfort 4 ou 104 comprend un mat non tissé de fibres longues. Par longues, on entend que les fibres ont une longueur supérieure à 50 mm.

Les modes de réalisation et les variantes mentionnés ci-dessus peuvent être combinés entre eux pour générer de nouveaux modes de réalisation de l'invention, telle que définie dans les revendications.

## Revendications

1. Procédé de fabrication d'une pièce bi-matière (12 ; 112), la pièce comprenant un substrat (2 ; 102) thermoformé et un renfort (4 ; 104) en matériau composite, comprenant des fibres et de la résine, le substrat étant thermoformé à partir d'une feuille dont une première face est en Acrylonitrile Butadiène Styrène, ou ABS, et dont une deuxième face est en Polyméthacrytale de Méthyle, ou PMMA, ce procédé comprenant au moins des étapes consistant à :
• a) placer (Fig 1) le substrat thermoformé sur un support (1 ; 101) ;
• b) disposer (Fig 2), sur la première face en ABS du substrat thermoformé, le renfort (4 ; 104) en matériau composite ;
• c) appliquer (Fig 3) sur le renfort en matériau composite au moins une couche (6, 8 ; 106, 108) de rétention de la résine ;
• d) superposer (Fig 4), à la ou les couches de rétention, une bâche étanche à l'air (10 ; 110) ;
• e) tirer le vide (Fig 5 ; Fig 9) sous la bâche ; et
• f) retirer la bâche (Fig 6) et la ou les couches de rétention.

2. Procédé selon la revendication précédente, dans lequel, suite à l'étape f), une étape g) consiste à usiner (Fig 7) la pièce (12 ; 112) bi-matière.

3. Procédé selon l'une quelconque des revendications précédentes, dans lequel le renfort en matériau composite (4 ; 104) comprend un tissu ou un mat non tissé en fibres continues ou longues, préférentiellement un tissu de fibres de verre, de fibres de carbone ou de fibres naturelles.

4. Procédé selon l'une quelconque des revendications précédentes, dans lequel la résine du renfort (4) est une résine polyester ou vinylester.

5. Procédé selon la revendication 4, dans lequel, entre l'étape a) et l'étape b), une étape intermédiaire consiste à appliquer localement (Fig 1), sur le substrat thermoformé (2), un liant en polyuréthane (5).

6. Procédé selon l'une quelconque des revendications 1 à 3, dans lequel la résine du renfort (104) est une résine acrylique.

7. Procédé selon l'une quelconque des revendications précédentes, dans lequel une des couches de rétention (6, 8 ; 106, 108) est un tissu en polyamide (6, 106).

8. Procédé selon la revendication 7, dans lequel une des couches de rétention (6, 8 ; 106, 108) est un buvard (8 ; 108).

9. Procédé selon l'une quelconque des revendications précédentes, dans lequel la ou les couches (6, 8 ; 106, 108) de rétention de la résine recouvrent au moins 75% de la surface du renfort 4, de préférence au moins 80% de la surface du renfort 4.

10. Pièce bi-matière (12 ; 112) comprenant un substrat thermoformé (2 ; 102) et un renfort (4 ; 104) en matériau composite, telle que la pièce est fabriquée selon un procédé conforme à l'une quelconque des revendications 1 à 9..

11. Pièce bi-matière (12) selon la revendication 10, dans laquelle le renfort (4) en matériau composite est composé d'au moins une couche de tissu à fibres continues et tissées entre elles imprégné d'une résine polyester ou vinylester.

12. Pièce bi-matière (112) selon l'une quelconque des revendications 10 et 11, dans laquelle le renfort (104) en matériau composite est composé d'au moins une couche de tissu à fibres continues et tissées entre elles imprégné d'une résine acrylique.

## Patentansprüche

1. Verfahren zur Herstellung eines Teils (12; 112) aus zwei Werkstoffen, wobei das Teil ein thermisch geformtes Substrat (2; 102) und eine Verstärkung (4; 104) aus Verbundmaterial umfasst, das Fasern und Harz umfasst, wobei das Substrat aus einer Folie thermisch geformt wird, von der eine erste Seite aus Acrylnitril-Butadien-Styrol oder ABS und von der eine zweite Seite aus Polymethylmethacrylat oder PMMA besteht, wobei dieses Verfahren mindestens folgende Schritte umfasst:
• a) Platzieren (Fig 1) des thermisch geformten Substrats auf einem Träger (1; 101);
• b) Anordnen (Fig 2) der Verstärkung (4; 104) aus Verbundmaterial auf der ersten Seite aus ABS des thermisch geformten Substrats;
• c) Aufbringen (Fig 3) mindestens einer Harzrückhalteschicht (6, 8; 106, 108) auf die Verstärkung aus Verbundmaterial;
• d) Überlagern (Fig 4) der Rückhalteschicht(en) mit einer luftdichten Plane (10; 110);
• e) Vakuumziehen (Fig 5; Fig 9) unter die Plane; und
• f) Entfernen der Plane (Fig 6) und der Rückhalteschicht(en).

2. Verfahren nach vorhergehendem Anspruch, wobei im Anschluss an Schritt f) ein Schritt g) darin besteht, das Teil (12; 112) aus zwei Werkstoffen zu bearbeiten (Fig 7).

3. Verfahren nach einem der vorhergehenden Ansprüche, wobei die Verstärkung aus Verbundmaterial (4; 104) einen Stoff oder eine Vliesmatte aus Endlos- oder Langfasern, vorzugsweise einen Stoff aus Glasfasern, Carbonfasern oder natürlichen Fasern, umfasst.

4. Verfahren nach einem der vorhergehenden Ansprüche, wobei das Harz der Verstärkung (4) ein Polyester- oder Vinylesterharz ist.

5. Verfahren nach Anspruch 4, wobei zwischen Schritt a) und Schritt b) ein Zwischenschritt darin besteht, auf das thermisch geformte Substrat (2) ein Bindemittel aus Polyurethan (5) lokal aufzutragen (Fig 1).

6. Verfahren nach einem der Ansprüche 1 bis 3, wobei das Harz der Verstärkung (104) ein Acrylharz ist.

7. Verfahren nach einem der vorhergehenden Ansprüche, wobei eine der Rückhalteschichten (6, 8; 106, 108) ein Stoff aus Polyamid (6, 106) ist.

8. Verfahren nach Anspruch 7, wobei eine der Rückhalteschichten (6, 8; 106, 108) ein Löschblatt (8; 108) ist.

9. Verfahren nach einem der vorhergehenden Ansprüche, wobei die Rückhalteschicht(en) (6, 8; 106, 108) des Harzes mindestens 75 % der Oberfläche der Verstärkung 4, vorzugsweise mindestens 80 % der Oberfläche der Verstärkung 4, bedeckt/bedecken.

10. Teil (12; 112) aus zwei Werkstoffen, umfassend ein thermisch geformtes Substrat (2; 102) und eine Verstärkung (4; 104) aus Verbundmaterial, so dass das Teil nach einem Verfahren nach einem der Ansprüche 1 bis 9 hergestellt wird.

11. Teil (12) aus zwei Werkstoffen nach Anspruch 10, wobei die Verstärkung (4) aus Verbundmaterial aus mindestens einer Stoffschicht aus kontinuierlichen, miteinander verwobenen Fasern zusammengesetzt ist, die mit einem Polyester- oder Vinylesterharz imprägniert ist.

12. Teil (112) aus zwei Werkstoffen nach einem der Ansprüche 10 und 11, wobei die Verstärkung (104) aus Verbundmaterial aus mindestens einer Stoffschicht aus kontinuierlichen und miteinander verwobenen Fasern zusammengesetzt ist, die mit einem Acrylharz imprägniert ist.

## Claims

1. A method of manufacturing a bi-material part (12; 112), the part comprising a thermoformed substrate (2; 102) and a reinforcement (4; 104) of composite material comprising fibres and resin, the substrate being thermoformed from a sheet, a first side of which is made of Acrylonitrile Butadiene Styrene, or ABS, and a second side of which is made of Polymethyl Methacrytal, or PMMA, this process comprising at least steps consisting of:
• a) placing (Fig 1) the thermoformed substrate on a support (1; 101);
• b) placing (Fig 2), on the first ABS face of the thermoformed substrate, the reinforcement (4; 104) made of composite material;
• c) applying (Fig 3) at least one resin retention layer (6, 8; 106, 108) to the composite material reinforcement;
• d) superimposing (Fig 4), on the retention layer(s), an airtight tarpaulin (10; 110);
• e) pull the vacuum (Fig 5; Fig 9) under the cover; and
• f) remove the tarpaulin (Fig 6) and the retention layer(s).

2. Method according to the preceding claim, in which, following step f), a step g) consists in machining (Fig 7) the bi-material part (12; 112).

3. A method according to any one of the preceding claims, in which the composite material reinforcement (4; 104) comprises a non-woven fabric or mat of continuous or long fibres, preferably a fabric of glass fibres, carbon fibres or natural fibres.

4. A method according to any one of the preceding claims, in which the resin of the reinforcement (4) is a polyester or vinyl ester resin.

5. A method according to claim 4, in which, between step a) and step b), an intermediate step consists in locally applying (Fig 1), to the thermoformed substrate (2), a polyurethane binder (5).

6. A method according to any one of claims 1 to 3, wherein the visual marker (104) is a two-dimensional code.

7. A method according to any one of the preceding claims, wherein one of the retention layers (6, 8; 106, 108) is a polyamide fabric (6, 106).

8. A method according to claim 7, wherein one of the retention layers (6, 8; 106, 108) is a blotter (8; 108).

9. A method according to any one of the preceding claims, in which the resin-retention layer or layers (6, 8; 106, 108) cover at least 75% of the surface of the reinforcement 4, preferably at least 80% of the surface of the reinforcement 4.

10. Bi-material part (12; 112) comprising a thermoformed substrate (2; 102) and a reinforcement (4; 104) made of composite material, such that the part is manufactured according to a process in accordance with any one of claims 1 to 9.

11. Bi-material part (12) according to claim 10, in which the reinforcement (4) made of composite material is composed of at least one layer of woven continuous-fibre fabric impregnated with a polyester or vinyl ester resin.

12. Bi-material part (112) according to any one of claims 10 and 11, in which the reinforcement (104) made of composite material is composed of at least one layer of woven continuous-fibre fabric impregnated with an acrylic resin.
